(19) Europäisches Patentamt
European Patent Office
Office européen des brevets

(11) Veröffentlichungsnummer: **0 255 594 B1**

(12) **EUROPÄISCHE PATENTSCHRIFT**

(45) Veröffentlichungstag der Patentschrift: **14.10.92**

(51) Int. Cl.5: **C08L 27/06**, C08L 51/04,
//(C08L27/06,51:04,9:02),
(C08L51/04,27:06,9:02)

(21) Anmeldenummer: **87108930.6**

(22) Anmeldetag: **23.06.87**

(54) Thermoplastische Formmassen aus Vinylchloridpolymerisaten und Pfropfpolymerisaten.

(30) Priorität: **05.07.86 DE 3622736**

(43) Veröffentlichungstag der Anmeldung:
**10.02.88 Patentblatt  88/06**

(45) Bekanntmachung des Hinweises auf die
Patenterteilung:
**14.10.92 Patentblatt  92/42**

(84) Benannte Vertragsstaaten:
**DE FR GB IT**

(56) Entgegenhaltungen:
**DE-A- 3 141 573**
**GB-A- 2 061 975**

(73) Patentinhaber: **BAYER AG**

**W-5090 Leverkusen 1 Bayerwerk(DE)**

(72) Erfinder: **Lindner, Christian, Dr.**
**Riehler Strasse 200**
**W-5000 Köln 60(DE)**
Erfinder: **Buding, Hartmuth, Dr.**
**Liebermannstrasse 1**
**W-4047 Dormagen(DE)**
Erfinder: **Braese, Hans-Eberhard, DI.**
**Käthe-Kollwitz-Strasse 3**
**W-5000 Köln 71(DE)**
Erfinder: **Casper, Rudolf, Prof. Dr.**
**St.Ingberter-Strasse 3**
**W-5090 Leverkusen 1(DE)**
Erfinder: **Ott, Karl-Heinz, Dr.**
**Paul-Klee-Strasse 54**
**W-5090 Leverkusen 1(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 255 594 B1

**Beschreibung**

Die Erfindung betrifft thermoplastische Formmassen, die sich insbesondere zur Herstellung von Folien eignen, aus einem Vinylchloridpolymerisat, einem thermoplastischen Pfropfpolymerisat und einem speziellen, hydrierten Nitrilkautschuk.

Kombinationen aus hydrierten Nitrilkautschuken unterschiedlichen Hydrierungsgrads, Kettenaufbaus und Molekulargewichtes sind z.B. in der japanischen Patentanmeldung JA 58 118 371, der US-PS 4 486 480 und der US-PS 3 700 637 beschrieben, insbesondere zur Herstellung von Kautschukmaterialien.

Es wurde nun gefunden, daß Mischungen aus Vinylchloridpolymerisat, Pfropfpolymerisat und speziellen hydriertem Nitrilkautschuk thermoplastische Formmassen darstellen, die besonders zur Herstellung von Folien geeignet sind und daß die aus solchen Formmassen hergestellten Formkörper besonders hervorragende Alterungsbeständigkeit, thermoplastische Verarbeitbarkeit, Thermostabilität, Dehnung, Wärmeformbeständigkeit und Härte aufweisen.

Gegenstand der Erfindung sind somit thermoplastische Formmassen aus

A: einem Vinylchloridhomo- oder -copolymerisat mit mindestens 50 Gew.-% Vinylchlorid,

B: einem Pfropfpolymerisat, hergestellt durch Pfropfpolymerisation von

B1: 50 bis 85 Gew.-Teilen eines Gemischs aus wenigstens zwei der Monomeren Styrol, Acrylnitril, Methylmethacrylat, α-Methylstyrol, auf

B2: 50 bis 15 Gew.-Teile eines wenigstens teilvernetzten Butadien- oder Acrylatkautschuks mit mittleren Teilchendurchmessern von 0,08 bis 1 $\mu$m, und

C: einem hydrierten Nitrilkautschuk, in dem der Nitrilgruppengehalt 5 bis 28 Gew.-% beträgt und der Hydriergrad größer als 50 % ist, sowie

D: gegebenenfalls einem unvernetztem, kautschukartigen Ethylen- oder Alkylacrylat-Polymerisat, welches gegebenenfalls bis zu 70 Gew.-% Vinylacetat, Acrylnitril, Methylmethacrylat, Kohlenmonoxid copolymerisiert enthalten kann,

E: gegebenenfalls einem wenigstens teilvernetzten, kautschukartigen Ethylen- oder Alkylacrylat-Polymerisat, welches gegebenenfalls bis zu 50 Gew.-% Vinylacetat, Acrylnitril, Methylmethacrylat, Kohlenmonoxid einpolymerisiert enthalten kann.

Bevorzugte Formmassen enthalten 10 bis 90 Gew.-Teile, insbesondere 15 bis 50 Gew.-Teile A, 90 bis 10 Gew.-Teile, insbesondere 85 bis 50 Gew.-Teile B sowie 10 bis 50 Gew.-%, bezogen auf die Summe von A + B, der Komponente C.

Besonders bevorzugte Formmassen enthalten zusätzlich wenigstens eine der Komponente D und E, insbesondere beide Komponenten D und E, wobei die Summe der Komponenten D und E nicht mehr als 50 Gew.-% der Formmassen ausmachen darf. Vorzugsweise werden D und E in Mengen von 10 bis 25 Gew.-%, bezogen auf die Formmasse, eingesetzt.

Vinylchloridpolymerisate A im Sinne der Erfindung sind insbesondere Polyvinylchlorid, Copolymerisate des Vinylchlorids mit bis zu 50 Gew.-% copolymerisierbaren Verbindungen, vorzugsweise mit bis zu 20 Gew.-% copolymerisierbaren Verbindungen, sowie Pfropfpolymerisate von Vinylchlorid auf Ethylen-Vinylacetat-Copolymerisaten (insbesondere mit Vinylacetatgehalten ≤50 Gew.-%); mit Vinylchlorid copolymerisierbare Verbindungen sind z.B.: Vinylester mit 1 bis 8 C-Atomen im Alkylrest der Carbonsäure, Vinylether mit 3 bis 7 C-Atomen, Maleinsäureanhydrid, Halbester der Maleinsäure mit aliphatischen Alkoholen mit 1 bis 8 C-Atomen im Alkoholrest und Diester der Maleinsäure mit aliphatischen Alkoholen mit 1 bis 8 C-Atomen im Alkoholrest.

Besonders bevorzugte Pfropfpolymerisate B werden hergestellt durch Pfropfpolymerisation von

B1. 50 bis 85 Gew.-Teilen, insbesondere 75 bis 65 Gew.-Teilen eines Styrol-Acrylnitril-Gemisches im Gew.-Verhältnis 90:10 bis 60:40, insbesondere 75:25 bis 65:35, wobei gegebenenfalls das Styrol ganz oder teilweise durch Methylmethacrylat oder α-Methylstyrol ersetzt sein kann, auf entweder

B2.1 50 bis 15 Gew.-Teile, insbesondere 25 bis 35 Gew.-Teile eines Butadien-homo- oder -copolymerisats mit einem Butadienanteil ≤35 Gew.-%, welches Gelgehalte ≥50 %, insbesondere ≥80 % aufweist, und einen mittleren Teilchendurchmesser von 0,09 bis 1 um ($d_{50}$-Werte) besitzt, oder

B2.2 50 bis 15 Gew.-Teile, insbesondere 25 bis 35 Gew.-Teile eines Alkylacrylat-homo- oder -copolymerisats mit einem Alkylacrylatanteil ≤35 Gew.-%, welches Gelgehalte ≥50 %, insbesondere ≥80 % aufweist, und einen mittleren Teilchendurchmesser von 0,09 bis 1 $\mu$m ($d_{50}$-Werte) besitzt.

Bevorzugte Kautschuke B2 sind Butadienhomopolymerisate, Butadien-Styrol-Copolymerisate, Butadien-Alkylacrylat-Copolymerisate sowie Polybutylacrylat, Polyhexylethylacrylat, Copolymere aus Butylacrylat und Acrylnitril oder Vinylether, Copolymere aus Vinylacetat und Butylacrylat. Bevorzugt sind ebenfalls teilchenförmige Kautschuke die eine sogenannte Kern-Mantel-Struktur aufweisen, z.B. einen Dienkautschukkern und eine Acrylatkautschukhülle oder einen Styrol-Acrylnitril-Polymerisat-Kern und eine Dienkautschuk- oder

2

vorzugsweise Acrylatkautschukhülle.

Komponente C im Sinne der Erfindung sind hydrierte Nitrilkautschuke d.h. Copolymerisate aus ungesättigten Nitrilen und konjugierten Dienen, worin der Hydriergrad größer als 50 %, bevorzugt größer als 70 %, besonders bevorzugt größer als 90 %, insbesondere größer als 98 %, ist. Sie haben einen CN-Gehalt von 5 bis 28 Gew.-%, bevorzugt von 7 bis 26 Gew.-%, besonders bevorzugt von 9 bis 24 Gew.-%. Die hydrierten Copolymerisate sind gelfrei (unvernetzt) und in Ketonen, wie Aceton oder Butanon, in Ethern, wie Tetrahydrofuran oder Dioxan oder in chlorierten Kohlenwasserstoffen, wie Dichlormethan oder Chlorbenzol, löslich.

Die hier in Rede stehenden hydrierten Copolymerisate werden erhalten, indem man bekannte alternierend oder vorzugsweise statistisch aufgebaute Copolymerisate aus ungesättigten Nitrilen und konjugierten Dienen, unter Erhalt der Nitrilgruppen hydriert. Die Hydrierung ist ebenfalls bekannt.

Beispiele für die zu hydrierenden Copolymerisate umfassen Copolymerisate aus zumindest einem ungesättigten Nitril, wie Acrylnitril oder Methacrylnitril und zumindest einem konjugierten Dien, wie Butadien-1,3; 2-Methylbutadien-1,3; 2,3-Dimethylbutadien-1,3; Pentadien-1,3 und ein Produkt, in dem ein Teil der konjugierten Dieneinheiten der vorstehenden Copolymerisate durch ein oder mehrere Einheiten von Vinylaromaten, (Meth)-Acrylsäureestern mit 1 bis 12 Kohlenstoffatomen in der Alkoholkomponente oder $\alpha,\beta$-ungesättigten Mono- oder Dicarbonsäuren ersetzt sind.

Als beispielhaft sind zu nennen: für die Vinylaromaten: Styrol, substituierte Styrole wie o-, m-, p-Methylstyrol, Ethylstyrol, ferner Vinylnaphthalin, Vinylpyridin, für die (Meth)Acrylsäureester Methyl(meth)acrylat, Ethyl(meth)acrylat, n-Butyl(meth)acrylat, 2-Ethylhexyl(meth)acrylat, 2-Hydroxypropyl(meth)acrylat; für die ungesättigten Carbonsäuren: $\alpha,\beta$-ungesättigte Monocarbonsäuren mit 3 bis 5 Kohlenstoffatomen, wie Acrylsäure-, Methacrylsäure- und Crotonsäure sowie $\alpha,\beta$-ungesättigte Dicarbonsäruen mit 4 bis 5 Kohlenstoffatomen, wie Malein-, Fumar-, Citracon- und Itaconsäure, ferner die Halbester der $\alpha,\beta$-ungesättigten Dicarbonsäuren wie Maleinsäure-n-dodecylhalbester oder Fumarsäure-n-butylhalbester.

Als andere copolymerisierbare Verbindungen kommen in Betracht: Vinylchlorid, Vinylidenchlorid, N-Methylolacrylamid, Vinylalkylether mit 1 bis 4 Kohlenstoffatomen in der Alkylgruppe, Vinylester von Carbonsäuren mit 1 bis 18 Kohlenstoffatomen, wie Vinylacetat oder Vinylstearat.

Spezielle Beispiele für die zu hydrierenden Copolymerisate umfassen ein Acrylnitril-Isopren-Copolymerisat, ein Acrylnitril-Isopren-Butadien-Copolymerisat, ein Acrylnitril-Isopren-n-Butylacrylat-Copolymerisat, ein Acrylnitril-Butadien-n-Butylacrylat-Copolymerisat, ein Acrylnitril-Butadien-Methylacrylat-Copolymerisat, ein Acrylnitril-Butadien-2-Hydroxypropylmethacrylat-Copolymerisat und ein Acrylnitril-Butadien-Methacrylsäure-Copolymerisat. Ein Acrylnitril-Butadien-Copolymerisat ist besonders bevorzugt.

Der Hydriergrad der Polymeren (Prozentsatz der hydrierten C-C-Doppelbindungen bezogen auf die Gesamtzahl der ursprünglich im Polymer vorhandenen C-C-Doppelbindungen) wird IR- oder NMR-spektroskopisch bestimmt.

Komponenten D im Sinne der Erfindung sind unvernetzt und stellen Ethylen- und/oder Alkylacrylathomo- oder -copolymerisate dar, die als Comonomere bis zu 70 Gew.-%, insbesondere bis zu 50 %, wie z.B. Acrylnitril, Vinylacetat, Methylmethacrylat, Kohlenmonoxid eingebaut enthalten können (wobei die Alkylacrylate die Ester eines $C_1$- bis $C_{12}$-Alkohols, insbesondere Butyl-, Hexyl-, Methyl-, Ethylacrylat, sind).

Bevorzugte Komponenten D sind Ethylen-Vinylacetat-Copolymere, Ethylen-Alkylacrylat-Copolymere, Ethylen-Vinylacetat-Kohlenmonoxid-terpolymere, Alkylacrylathomopolymerisate, Alkylacrylat-Acrylnitril-Copolymerisate, oder Butadien-Alkylacrylat-Copolymerisate.

Komponenten E im Sinne der Erfindung sind wenigstens teilvernetzt und stellen Ethylen- und/oder Alkylacrylathomo- oder -copolymerisate dar, die als Comonomere bis zu 70 Gew.-%, insbesondere bis zu 50 Gew.-%, besonders bis zu 40 Gew.-%, wie z. B. Acrylnitril, Vinylacetat, Methylmethacrylat, Kohlenmonoxid eingebaut enthalten können (wobei die Alkylacrylate die Ester eines $C_1$- bis $C_{12}$-Alkohols, insbesondere Butyl-, Hexyl-, Methyl-, Ethylacrylat sind). Die Komponenten sind wenigstens teilvernetzt und besitzen Gelgehalte von wenigstens 20 Gew.-%, vorzugsweise wenigstens 40 Gew.-%. Liegen die Komponenten E in einer vernetzten, teilchenförmigen Form vor, so spielt bei bestimmten Produktzusammensetzungen auch die Teilchengröße eine bestimmte Rolle. Die Vernetzungen bzw. Gelgehalte in Komponente E lassen sich durch bekannte Maßnahmen einstellen, z. B. durch radikalische Vernetzung der unvernetzten Polymeren, vorzugsweise aber durch Copolymerisation von bi- oder polyfunktionellen Monomeren mit konjugierten oder unkonjugierten Doppelbindungen oder Dreifachbindungen im Molekül (wie z. B. Divinylbenzol, Alkylen-di-(meth)acrylat, Trialkyl(iso)Cyanurat, Butadien, Isopren, Allyl(meth)acrylat).

Die erfindungsgemäß geeigneten Vinylchloridpolymerisate können nach bekannten technischen Verfahren hergestellt werden, z.B. durch Emulsions-, Suspensions-, bzw. Masse-Polymerisations.

Zur Herstellung geeigneter Pfropfpolymerisate (B) können Verfahren wie Emulsions-, Suspensions- oder Fällungspolymerisation herangezogen werden. Besonders geeignet sind die Emulsions- und Suspensionspolymerisation; besonders bevorzugte Pfropfpolymerisate werden erhalten, indem man in einer ersten Stufe geeignete Monomere in wäßriger Emulsion (in Anwesenheit von Emulgatoren, Radikalbildnern, Reglern, etc.) radikalisch zu einem Kautschuklatex mit Teilchen von 0,08 bis 1 $\mu$m Durchmesser polymerisiert (gegebenenfalls auch mit Agglomerisation der Teilchen, und in Gegenwart dieses Kautschuklatex die genannten Vinylmonomeren (insbesondere Styrol, Acrylnitril, Methylmethacrylat) pfropfcopolymerisiert.

Im Anschluß an die Pfropfpolymerisation können Antioxidantien (z.B. vom Phenoltyp) zugesetzt werden. Aus den erhaltenen Pfropfpolymerlatices lassen sich die Polymerisate nach bekannten Verfahren isolieren (insbesondere in Form von Pulvern) z.B. durch Koagulation mit Elektrolyten, Säuren oder Lösungsmitteln und anschlagender Isolierung, Entwässerung und Trocknung.

Die Komponenten D und E die in den Formassen bevorzugt in Mengen von bis zu 30 Gew.-% (D) und/oder bis zu 20 Gew.-% (E) enthalten sind sind ebenfalls nach bekannten Verfahren herstellbar, insbesondere Emulsion-, Suspensions-, Lösungs- oder Fällungspolymerisation vorzugsweise mittels radikalischer Initiatoren.

Man kann solche Polymere entweder aus ihren anfallenden Latices isolieren (z.B. durch Sprühtrocknung oder Elektrolytkoagulation) oder die Latices mit Latices anderer Bestandteile der erfindungsgemäßen Formmassen (z.B. mit einem ABS-Latex) vermischen und gemeinsam koagulieren.

Diese sogenannten Co-Koagulation liefert Teilmischungen die zu Formmassen mit besonderen, guten Eigenschaften führen, z.B. verbesserter Verarbeitbarkeit.

Die erfindungsgemäßen Formmassen lassen sich problemlos mit bekannten PVC-Weichmachern, Gleitmitteln, Pigmenten versetzen und thermoplastisch verarbeiten. Ebenfalls können die Formmassen mit anderen thermoplastischen Vinylpolymerisaten gemischt werden (z.B. Styrol/Acrylnitril Copolymerisaten, Polymethylmethacrylat, $\alpha$-Methylstyrolcopolymerisaten) sowie mit Kautschuken wie chloriertem Polyethylen oder Butadien-Acrylnitril-Kautschuk (NBR), um ihre Eigenschaften zu modifizieren.

Die erfindungsgemäßen Formmassen können nach üblichen Methoden der Polyvinylchloridverarbeitung verarbeitet werden, beispielsweise durch Spritzguß, Extrusion, Hohlkörperblasen, Tiefziehen, Kalandrieren, dabei lassen sich alle gewünschten Formteile herstellen. Insbesondere eignen sich die Formmassen zur Herstellung von Folien mit komplexem Anforderungsprofil.

Die Grenzviskositäten (Staudinger-Indices) wurden in dem jeweiligen, angegebenen Lösungsmittel bestimmt. Zur Definition von Staudinger-Index, Quellungsindex, Geigehalte siehe M. Hoffmann, H. Krömer, R. Kuhn "Polymeranalytik I und II" Georg-Thieme Verlag (Stuttgart) (1977).

Die Kautschukteilchendurchmesser sind $d_{50}$-Werte (zur Definition siehe Ultrazentrifugen-Messungen; W. Scholtan, H. Lange, Kolloidz. und Z. Polymere 250 (1972) 783-796.

Beispiele

Zur Herstellung der in Tabelle 1 beschriebenen Formmassen werden x Gew.-Teile Polyvinylchlorid (K-Wert 70) mit unterschiedlichen Mengen verschiedener Produkte kombiniert. Als notwendiger Stabilisator- und Gleitmittelzusatz werden in jedem Fall 2 Gew.-% Ba/Cd-Laurat (fest), 0,3 Gew.-% phenolisches Antioxidans (fest) und 0,2 Gew.-% Esterwachs zugesetzt. Die Formmassen werden auf einem Mischwalzwerk 10 min. bei 180°C homogenisiert und bei 190°C zu Prüfkörpern verpreßt.

Eingesetzte Polymerisate

Typ B:

B1. Ein ABS-Polymerisat, hergstellt durch Emulsionspolymerisation, enthaltend 30 Gew.-% Polybutadien mit einem Gelgehalt von >70 % und einer Teilchengröße von 0,4 $\mu$m.
B2. Ein ASA-Propfpolymerisat, enthaltend 25 Gew.-% vernetztes Polybutylacrylat (mit Kern-Mantelstruktur) und 75 Gew.-% SAN.

Typ C:

C1. Hydriertes Acrylnitril-Butadien-Copolymerisat (erhalten aus einem statistisch aufgebauten Acrylnitril-Butadien-Emulsionscopolymerisat) mit einer Mooney-Viskosität ML 1 + 4 (100°C) von 71 ME, einem CN-Gehalt von 16,8 GEw.-% und einem Hydriergrad von größer als 99 %.

Typ D:

4

D1. Das Polymerisat besteht aus 70 Gew.-% Vinylacetat und 30 Gew.-% Ethylen und besitzt ein durchschnittliches Molekulargewicht von ca. 200.000.

Typ E:

E1. Das Polymerisat besteht aus 29 Gew.-% Acrylnitril und 71 Gew.-% Butadien, stellt ein Emulsionspolymerisat dar und weist einen Gelgehalt von ≧60 % auf.

E2. Durch Emulsionspolymerisation bei 65°C wird entsprechend folgender Rezeptur ein Latex enthalten, aus dem durch Koagulation mit $MgSO_4$ ein kautschukartiges Polymer erhalten wird:

2.585 Gew.-Teile Wasser
27 Gew.-Teile Ny-C 14-16-Alkylsulfonat
2 Gew.-Teile Kaliumperoxidisulfat
1.182 Gew.-Teile Butylacrylat
393 Gew.-Teile Acrylnitril
4 Gew.-Teile Triallylcyanurat

Das Polymer weist einen Gelgehalt (in DMF) von 92 auf und einen Quellungsindex von 19,8.

Weiteres:     Trimellitsäure $C_7$-$C_9$-Alkylester (TSA).

EP 0 255 594 B1

<u>Tabelle 1</u>      Formmassen (Angaben.in Gew.-Teilen)

| Lfd.Nr. | PVC | B1 | B2 | C1 | D1 | E1 | E2 | TSA | |
|---------|-----|----|----|----|----|----|----|-----|-----|
| 1 | 55 | 45 | - | - | 35 | 13 | - | 5 | *)[1] |
| 2 | 55 | 45 | - | 35 | - | 13 | - | 5 | |
| 3 | 40 | 27 | - | - | - | 18 | - | 15 | *) |
| 4 | 40 | 27 | - | 18 | - | - | - | 15 | |
| 5 | 55 | - | 45 | - | 35 | - | 13 | 5 | *) |
| 6 | 55 | - | 45 | 35 | - | - | 13 | 5 | |
| 7 | 55 | 45 | - | 30 | - | 13 | - | 5 | |
| 8 | 55 | 45 | - | 25 | - | 13 | - | 5 | |

*)[1] = Vergleichsbeispiele

**Tabelle 2**    Formmasseneigenschaften

| Lfd.Nr. | Zugfestigkeit DIN 53 455 (MPa) | Dehnung DIN 53 455 (%) | Weiterreiß-festigkeit DIN 53 515 (N/mm) | Shore-Härte DIN 53 505 (A/D) | Vicat-Erweichung Verfahren A (°C) |
|---|---|---|---|---|---|
| 1 | 29,9 | 274 | 87,4 | 95/53 | 77 |
| 2 | 34,6 | 358 | 87,7 | 94/49 | 64 |
| 3 | 23,5 | 304 | 70,1 | 95/52 | 75 |
| 4 | 23,9 | 361 | 92,1 | 92/42 | 67 |
| 5 | 28,1 | 250 | 84,5 | 96/58 | 65 |
| 6 | 35,2 | 335 | 83,4 | 95/46 | 60 |
| 7 | 31,0 | 330 | 87,6 | 95/50 | 70 |
| 8 | 30,4 | 300 | 87,7 | 95/52 | 77 |

## Patentansprüche

1. Thermoplastische Formmassen aus

    A: einem Vinylchloridhomo- oder -copolymerisat mit mindestens 50 Gew.-% Vinylchlorid,

    B: einem Pfropfpolymerisat, hergestellt durch Pfropfpolymerisation von

        B1: 50 bis 85 Gew.-Teilen eines Gemischs aus wenigstens zwei der Monomeren Styrol, Acrylnitril, Methylmethacrylat, α-Methylstyrol, auf

        B2: 50 bis 15 Gew.-Teile eines wenigstens teilvernetzten Butadien- oder Acrylatkautschuks mit mittleren Teilchendurchmessern von 0,08 bis 1 μm, und

    C: einem hydrierten Nitrilkautschuk, in dem der Nitrilgruppengehalt 5 bis 28 Gew.-% beträgt und der Hydriergrad größer als 50 % ist, sowie

    D: gegebenenfalls einem unvernetztem, kautschukartigen Ethylen- oder Alkylacrylat-Polymerisat, welches gegebenenfalls bis zu 70 Gew.-% Vinylacetat, Acrylnitril, Methylmethacrylat, Kohlenmonoxid copolymerisiert enthalten kann,

E: gegebenenfalls einem wenigstens teilvernetzten, kautschukartigen Ethylen- oder Alkylacrylat-Polymerisat, welches gegebenenfalls bis zu 50 Gew.-% Vinylacetat, Acrylnitril, Methylmethacrylat, Kohlenmonoxid einpolymerisiert enthalten kann.

2. Thermoplastische Formmassen nach Anspruch 1, dadurch gekennzeichnet, daß sie bestehen aus
10 - 90 Gew.-Tl. Komponente A
90 - 10 Gew.-Tl. Komponente B
10 - 50 Gew.-Tl., bezogen auf die Summe von A + B, der Komponente C.

3. Thermoplastische Formmassen gemäß Anspruch 1, dadurch gekennzeichnet, daß sie enthalten
bis zu 20 Gew.-% Komponente E und/oder
bis zu 30 Gew.-% Komponente D, wobei sich die %-Angaben auf die jeweilige Gesamtformmasse beziehen sollen.

4. Verwendung von hydrierten Copolymerisaten aus ungesättigten Nitrilen und konjugierten Dienen als Zusatz zu thermoplastischen PVC-Kunststoffen.

## Claims

1. Thermoplastic moulding compounds of
   A: a vinyl chloride homopolymer or copolymer containing at least 50% by weight vinyl chloride,
   B: a graft polymer prepared by graft polymerization of
      B1: 50 to 85 parts by weight of a mixture of at least two of the monomers styrene, acrylonitrile, methyl methacrylate, $\alpha$-methyl styrene on
      B2: 50 to 15 parts by weight of an at least partly crosslinked butadiene or acrylate rubber having average particle diameters of 0.08 to 1 $\mu$m and
   C: a hydrogenated nitrile rubber having a nitrile group content of 5 to 28% by weight and a degree of hydrogenation of greater than 50% and
   D: optionally an uncrosslinked rubber-like ethylene or alkyl acrylate polymer which may optionally contain up to 70% by weight vinyl acetate, acrylonitrile, methyl methacrylate, carbon monoxide in copolymerized form,
   E: optionally an at least partly crosslinked, rubber-like ethylene or alkyl acrylate polymer which may optionally contain up to 50% by weight vinyl acetate, acrylonitrile, methyl methacrylate, carbon monoxide in copolymerized form.

2. Thermoplastic moulding compounds as claimed in claim 1, characterized in that they consist of
   10 to 90 parts by weight of component A,
   90 to 10 parts by weight of component B
   10 to 50 parts by weight, based on the sum of A + B, of component C.

3. Thermoplastic moulding compounds as claimed in claim 1, characterized in that they contain
   up to 20% by weight of component E and/or
   up to 30% by weight of component D,
   the percentages by weight being based on the moulding compound as a whole.

4. The use of hydrogenated copolymers of unsaturated nitriles and conjugated dienes as an additive for thermoplastic PVC types.

## Revendications

1. Matières à mouler thermoplastiques à base
   A : d'un homopolymère ou d'un copolymère de chlorure de vinyle contenant au moins 50 % en poids de chlorure de vinyle,
   B : d'un polymère greffé produit par polymérisation de greffage
      B1 : de 50 à 85 parties en poids d'un mélange d'au moins deux des monomères styrène, acrylonitrile, méthacrylate de méthyle, $\alpha$-méthylstyrène, sur
      B2 : 50 à 15 % en poids d'un caoutchouc de butadiène ou d'acrylate au moins partiellement réticulé ayant des diamètres moyens de particules de 0,08 à 1 $\mu$m, et

C : d'un caoutchouc nitrilique hydrogéné dont la teneur en groupes nitrile s'élève à 5-28 % en poids et le degré d'hydrogénation est supérieur à 50 %,

ainsi que

D : le cas échéant, d'un polymère d'éthylène ou d'acrylate d'alkyle non réticulé, analogue au caoutchouc, qui peut éventuellement contenir à l'état copolymérisé jusqu'à 70 % en poids d'acétate de vinyle, d'acrylonitrile, de méthacrylate de méthyle, d'oxyde de carbone,

E : le cas échéant, d'un polymère d'éthylène ou d'acrylate d'alkyle au moins partiellement réticulé, analogue au caoutchouc, qui peut contenir éventuellement, à l'état incorporé par polymérisation, jusqu'à 50 % en poids d'acétate de vinyle, d'acrylonitrile, de méthacrylate de méthyle, d'oxyde de carbone.

2. Matières à mouler thermoplastiques suivant la revendication 1, caractérisées en ce qu'elles sont constituées

de 10 à 90 parties en poids de composant A,

de 90 à 10 parties en poids de composant B,

de 10 à 50 parties en poids, par rapport à la somme A + B, de composant C.

3. Matières à mouler thermoplastiques suivant la revendication 1, caractérisées en ce qu'elle contiennent jusqu'à 20 % en poids de composant E et/ou

jusqu'à 30 % en poids de composant D, les indications de % se rapportant à la matière à mouler totale concernée.

4. Utilisation de copolymères hydrogénés à base de nitriles non saturés et de diènes conjugués comme additifs pour des matières thermoplastiques à base de polychlorure de vinyle.